# EUROPEAN PATENT SPECIFICATION

(11) **EP 2 512 847 B1**
(45) Date of publication and mention of the grant of the patent: **14.08.2013**
(21) Application number: 10798495.7
(22) Date of filing: 01.12.2010
(51) Int. Cl.: B60H 1/00, F16L 37/36, F25B 45/00, F16L 37/138, F25B 41/00

(54) **SERVICE EQUIPMENT FOR SERVICING COOLING SYSTEMS IN VEHICLES**
WARTUNGSAUSRÜSTUNG ZUR WARTUNG VON KÜHLSYSTEMEN IN FAHRZEUGEN
ÉQUIPEMENT D'ENTRETIEN POUR L'ENTRETIEN DES SYSTÈMES DE REFROIDISSEMENT DANS LES VÉHICULES

(30) Priority: 17.12.2009 DK 200901337; 15.10.2010 DK 201000938
(43) Date of publication of application: 24.10.2012
(73) Proprietor: Agramkow Fluid Systems A/S, 6400 Sønderborg (DK)
(72) Inventor: LUND, Bjarne, DK-6400 Sønderborg (DK)
(74) Representative: Larsen, Hans Ole
(86) International application number: PCT/DK2010/000162
(87) International publication number: WO 2011/072680

(56) References cited:
- DE-U1-202006 002 875
- US-A- 5 080 132
- US-A1- 2003 226 598

## Description

### The prior art

The invention relates to service equipment for servicing cooling systems in vehicles and comprising an emptying mechanism for emptying coolant possibly admixed with oil and/or a filling mechanism for filling coolant to a closed circuit and having means for sucking out possibly inflammable coolants.

Equipment of this type is used for servicing cooling systems, where the coolants are formed by non-inflammable substances, for which reason the requirements of a safety zone in connection with the equipment itself are not necessary.

Where, however, the coolant consists of an inflammable substance, the equipment must satisfy the so-called ATEX Directive 94/9/EG, in which rules relating to the use of and equipment for the treatment of inflammable agents involve requirements with respect to the equipment in the form of safety zones.

US 5 080 132 discloses an equipment according to the preamble of claim 1.

### The object of the invention

It is the object of the invention to provide service equipment for use in connection with inflammable media, such as inflammable coolants and mixtures of these with oil, and this is achieved according to the invention by means of equipment having a mechanism which consists of an adapter, which is provided with coupling means in the form of gripping claws for gripping a filling stub, said coupling means being activated by an actuator, and is also provided with ventilation of the area inside the adapter in which inflammable gases may occur.

It is ensured in this surprisingly simple manner that the inflammable area, the so-called Zone 2 area, is restricted to the area inside the adapter itself.

This provides the great practical advantage that the area around the adapter is downgraded, i.e. is designated a non-dangerous area.

When, as stated in claim 2, air is sucked out via a channel in the supply hose, the desired ventilation of possible inflammable media in the Zone 2 area may be achieved in a simple manner.

When, as stated in claim 3, the tightness of the system is tested by a pressure test and a subsequent vacuum test, it will be assured that all gaskets and fits are absolutely tight, and thereby that the area around the adapter may be downgraded to a non-inflammable area.

When, as stated in claim 4, the gripping means for the filling stub are constructed as hinged gripping claws, which cooperate with an annular groove in the filling stub, and which are brought into engagement by an axial displacement of an outer bushing with bosses caused by the actuator, a safe and pressure-proof coupling is achieved.

When, as stated in claim 5, the gasket is affected by means of a spring pressure which subjects the gasket to axial pressure, and whose spring is compressed by the pneumatic actuator, a simple and reliable tightness is achieved.

The part of the actuator which opens the non-return valve, is a rod extending at the axis of the pipe, said rod being in firm connection with the pneumatic piston and being adapted to continue the axial movement after the gripping means for the stub have been brought into engagement and the gasket has been subjected to axial pressure, whereby the end of the rod pushes the non-return valve to an open position, said spring unit being compressed additionally by the continued movement of the piston, as stated in claim 6.

When the actuator has performed the first operations, its movement continues against the action of the spring, whereby the rod disposed innermost is caused to contact the non-return valve and opens it.

Environmental considerations, too, are to be shown with respect to the residual medium volume which occurs after a filling with an ordinary filling apparatus.

Since, during the filling process, the medium may change its state from liquid to gas, the coupling, as stated in claim 7, is provided with a heating member, said heating member counteracting condensation in the coupling itself, but it is ensured at the same time that the medium enters into a gas phase at the terminating phase of the filling itself, whereby undercooling and a concomitant expansion of the medium take place. Owing to this strong expansion of the medium, an insignificant amount of the medium is left in the coupling itself.

Since pre-evacuation also takes place before the next filling and connection with the coupling, this, together with the above-mentioned expansion, contributes to ensuring that an insignificant amount, if any at all of the medium has the possibility of escaping to the surroundings.

### The drawing

An example of an embodiment of the adapter according to the invention will be described more fully below with reference to the drawing, in which
- fig. 1: shows a sectional view of the adapter with a connection hose prior to the coupling-together,
- fig. 2: shows a sectional view of the coupling unit itself prior to the coupling-together,
- fig. 3: shows a sectional view of the coupling part after the coupling-together with the stub,
- fig. 4: shows a sectional view where the gripping means have been caused to engage,
- fig. 5: shows a sectional view where a positive pressure is applied for pressure testing,
- fig. 6: shows a sectional view where the medium is evacuated,
- fig. 7: shows a sectional view during filling of coolant,
- fig. 8: shows a sectional view after the filling,
- fig. 9: shows a sectional view after the disengagement, and
- fig. 10: shows a sectional view at the emptying of residual coolant.

### Description of a working example

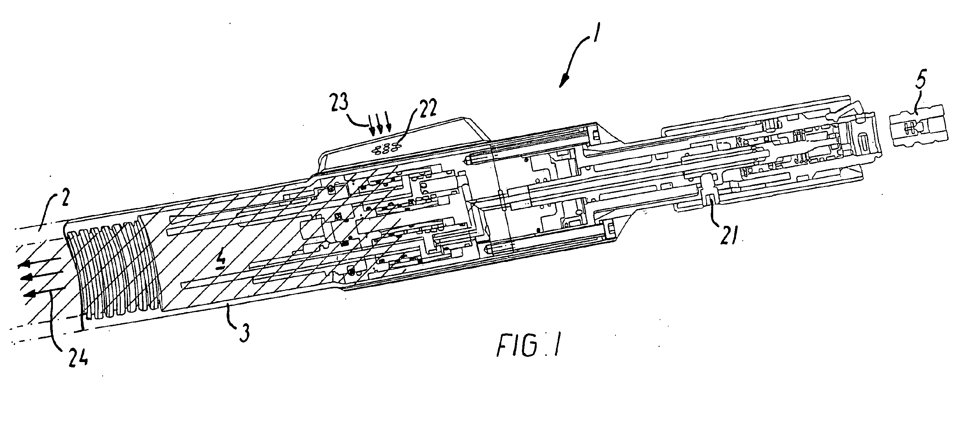

An example of a filling adapter according to the invention is shown in fig. 1.

The adapter 1 itself comprises a rear part 3 with a supply hose 2 having a feed for coolant, pressure test gas, and ventilation in the form of a suction channel for air 4, said air being admitted 23 through openings 22 in the housing, whose interior 4 may thereby be ventilated.

The coupling unit itself is provided at the front, said coupling unit being adapted to be coupled with an inlet stub 5 with connection to the closed circuit in the cooling system.

Now, the coupling part will be described more fully.

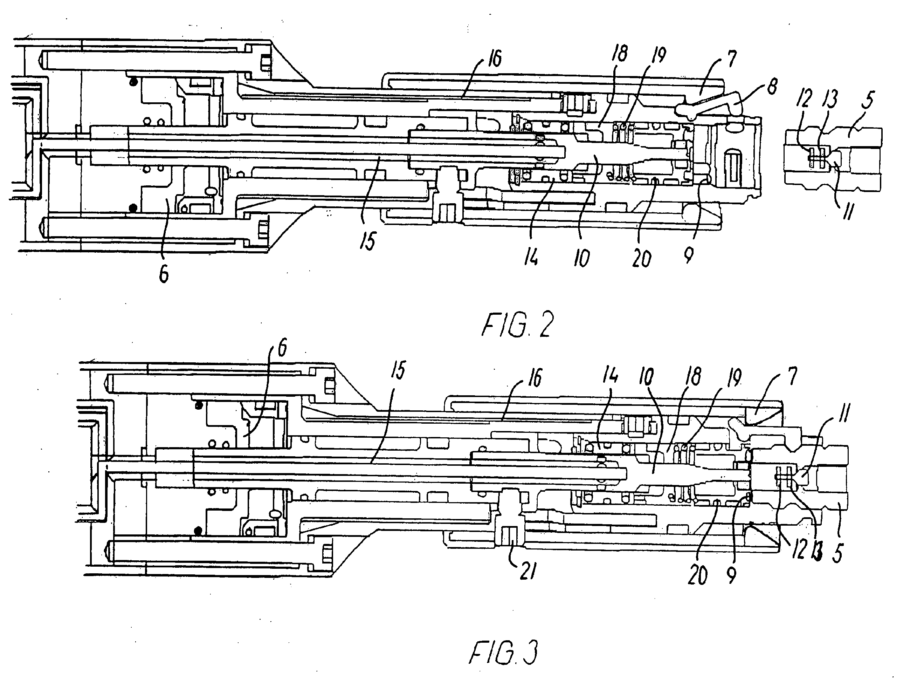

The coupling itself, which is shown in fig. 2, comprises a pneumatic actuator 6, an outer jacket 7, gripping means 8, gaskets 9 for sealing against a face, a pin 10 for opening a non-return valve 11 of a filling stub 5, a filling stub 5, a non-return valve 11 of the filling stub, with a point 12 where the pin just touches the non-return valve, an opening/closing point 13, an internal valve 14, an internal filling pipe 15, a heating member 16, a biasing unit 18, a spring 19 and a gasket holder 20.

When the coupling is composed of inter alia the above-mentioned parts, the coupling may be adopted on the filling stub 5, until the gasket 9 engages the face of the filling stub. This situation is shown in fig. 3. The filling pipe 15 of the coupling is pre-evacuated from the internal valve 14 and back. The pre-evacuation may be effective right back to the supply line.

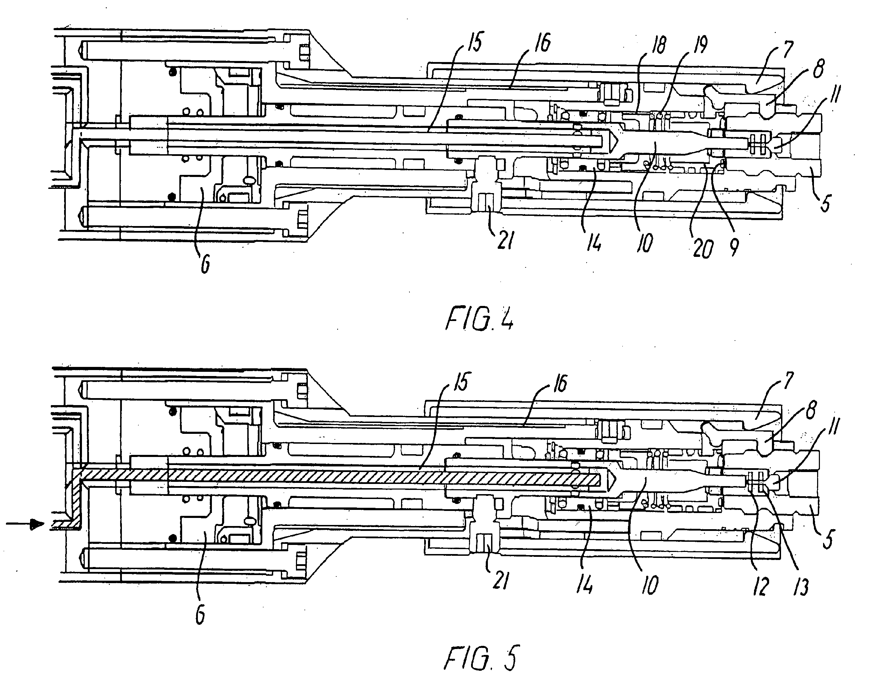

Then, the start button on the operating unit is activated, whereby the pneumatic actuator 6 is activated and is moved forward, that is to the right, as will appear from fig. 4, so that the outer jacket 7 is moved correspondingly forwards and pushes the gripping means 8 into engagement with the collar of the filling stub 5. The biasing unit 18 is activated at the same time by the filling pipe 15, whereby the forces of the spring 19 are transferred to the gasket holder 20, and the gasket 9 now sealingly engages the filling stub 5. It is ensured in this manner that the gasket 9 is sealingly engaged both under vacuum and under pressure.

It is noted that this structure provides a safeguard against leakage - even if the air should drop out for some reason.

Thus, it appears from fig. 4 that when the outer jacket 7 is in its foremost position and the gripping means 8 are thus in full engagement with the stub 5, the biasing unit 18 and thereby the gasket 9 are mechanically "locked together", even if the actuator 6 might become pressureless and thereby inactive.

This ensures that the gasket 9 will always be in a tight position, just as the gripping means 8 cannot "release" the stub 5, and, thereby, there is no risk of escape of possible inflammable gases from the actuator, even if the pressure should cease either completely or partly.

The pneumatic actuator 6 continues forwards toward the touch point 12 of the non-return valve, as shown in fig. 5. At the same time, the internal valve 14 opens, and the volume present between the internal valve 14 and the non-return valve 11 is evacuated.

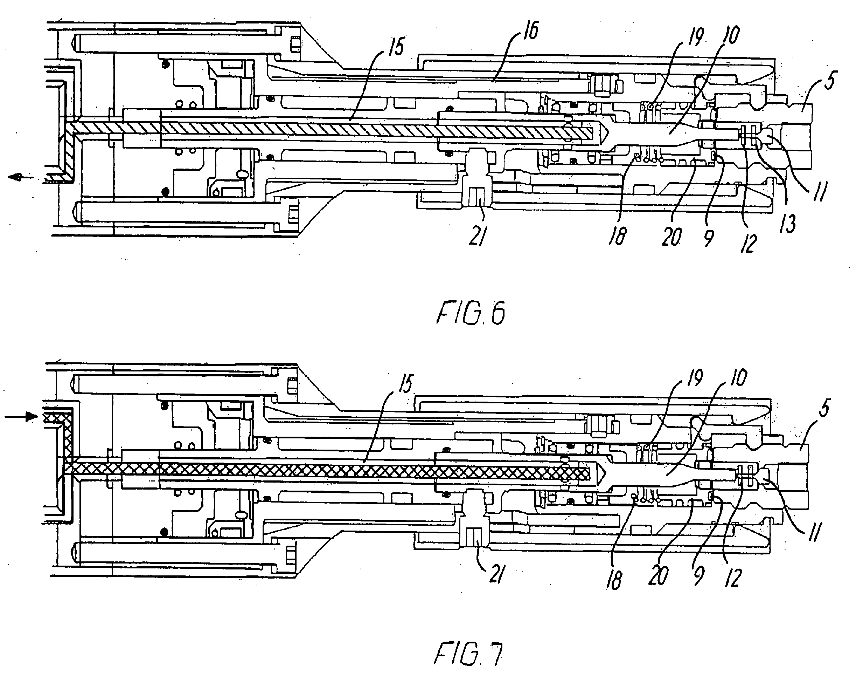

The pneumatic actuator 6 then continues to its end position, as shown in fig. 6. Hereby, the spring 19 is compressed maximally by the biasing unit 18, whereby the force is transferred via the gasket holder 20 to the gasket 9. The sealing to the filling stub 5 is thus both vacuum- and pressure-proof. In the meantime, the pin 10 has been advanced to the opening/closing point 13 of the non-return valve 11, and the filling process may now be carried out. This also ensures that the non-return valve 11 of the filling stub 5 is affected by the actuator 6 for opening via the internal filling parts, which filling parts may preferably be the filling pipe 15, the internal valve 14, the pin 10 for opening the non-return valve 11 of the filling stub 5, the biasing unit 18 and the gasket holder 20 with the gasket 9.

To ensure that the medium supply is blocked when the coupling part 4 is disconnected, a pin 21 or the like may be provided, said pin 21 connecting the outer jacket with the inner coupling parts mechanically, so that if the jacket is pulled back for the disconnection of the coupling, the inner coupling parts comprising the medium supply parts will likewise be closed and removed from the filling stub 5.

As the medium may change its state from liquid to gas during filling, the coupling is provided with a heating member 16, which counteracts condensation in the coupling, while ensuring that when the filling is terminated, the medium enters into a gas phase, whereby undercooling with concomitant strong expansion of the medium takes place, which leaves an insignificant amount of medium in the coupling.

In a preferred embodiment, the individual modules are secured to each other by means of only two screws, but may be secured to each other in other ways.

Then, the tightness control as well as the ventilation of possibly inflammable gases will be described more fully.

The tightness control is initiated by the supply of nitrogen, which is a non-inflammable gas, as indicated by an arrow to the hatched cavity in the filling pipe 15 in fig. 5.

All gaskets in the front part of the adapter and in the supply line itself are thus pressure-tested, so that tightness is assured.

Then, the cavity is evacuated, and a vacuum test is carried out, which is shown in fig. 6, where the exhaustion of the hatched cavity is indicated by an arrow. In this manner, all gaskets are checked for tightness at vacuum.

When both the pressure test and the vacuum test are positive, the actual filling of the inflammable medium may be initiated, as indicated by cross hatching in fig. 7.

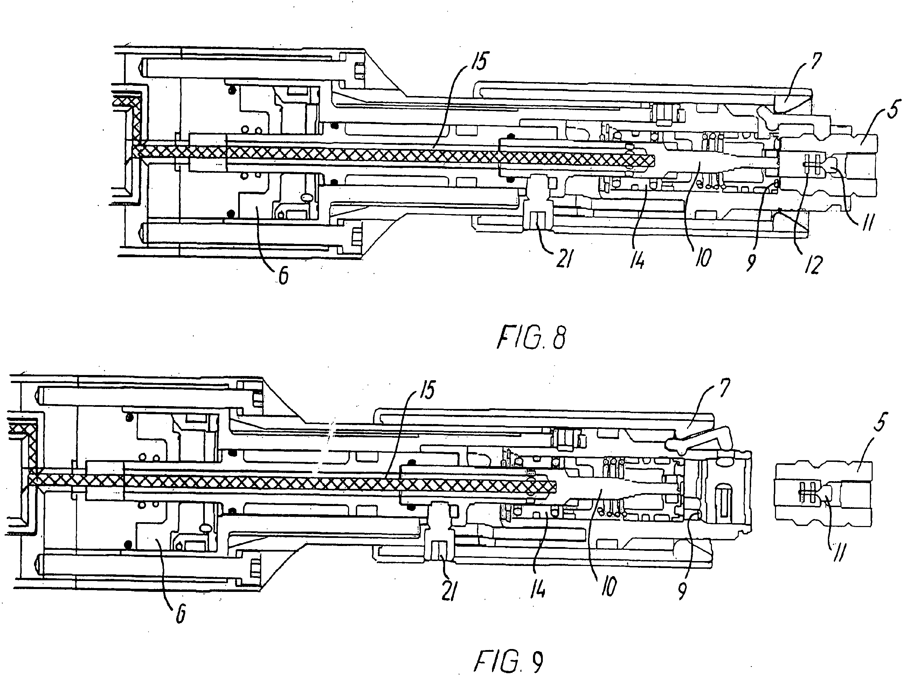

When the filling has been completed, the pin 10 is pulled back by the actuator 6, as shown in fig. 8. Residual coolant may still be left in the adapter, which will be discharged later.

Now, the adapter may be disconnected, as shown in fig. 9.

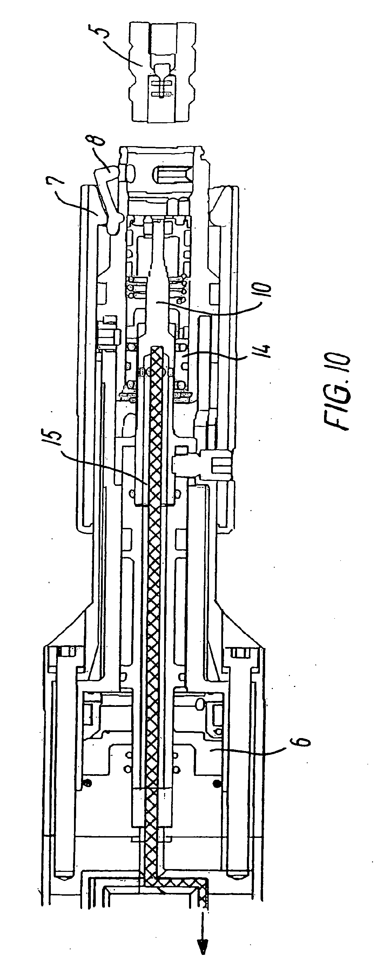

Finally, residual coolant, if any, may be emptied, as indicated by an arrow in fig. 10.

To satisfy the ATEX Directive, and as described before, the adapter is provided with means for the ventilation of the cavity 4 in the adapter 1, as indicated by hatching in fig. 1. This is the so-called Zone 2.

The ventilation takes place by connecting the cavity 4 with a suction channel, which communicates with a ventilator which may be mounted in the rest of the service system or optionally outside the building itself.

The admission takes place via openings 22 in the housing 3, as indicated by arrows 23. If a leakage should occur in the adapter or in the hose, these possible inflammable gases will be exhausted to the rest of the service equipment, where sensors will give an alarm in case of leakage. This satisfies the requirements with respect to the handling of equipment pursuant to the ATEX Directive.

## Claims

1. Service equipment for servicing cooling systems in vehicles and comprising an emptying mechanism for emptying coolant, possibly admixed with oil, and/or a filling mechanism for filling coolant to a closed circuit and having means for sucking out possibly inflammable coolants, wherein the mechanisms consist of an adapter (1), which is provided with coupling means in the form of gripping claws (8) for gripping a filling stub (5), said coupling means being activated by an actuator (6), **characterized in that** said coupling means are provided with ventilation of the area (4) inside the adapter (1) in which inflammable gases may occur.

2. Service equipment according to claim 1, **characterized in that** the inlet of the ventilation to the area (4) in the adapter (1) takes place via openings (22) in the adapter housing (3), and that its outlet (24) takes place via a ventilation channel provided in its supply hose (2).

3. Service equipment according to claims 1 and 2, **characterized in that** the equipment is moreover provided with means for pressure testing the adapter (1), said means comprising a pressure test by the supply of nitrogen under pressure to the adapter (1) and a subsequent vacuum test by evacuation of the adapter (1).

4. Service equipment according to claim 1, **characterized in that** the coupling means for the filling stub are hinged gripping claws (8), which cooperate with an annular groove in the filling stub, and which are brought into engagement by an axial displacement of an outer bushing (7) with bosses caused by the actuator (6).

5. Service equipment according to claims 1 and 4, **characterized in that** means for applying pressure to the gasket (9) comprise a spring unit (19), which subjects the gasket (9) to axial pressure, and whose spring is compressed by the pneumatic actuator (6).

6. Service equipment according to claims 1, 4 , 5, **characterized in that** the part of the actuator which opens a non-return valve, is a rod (10) extending at the axis of the pipe, said rod being in firm connection with the pneumatic piston and being adapted to continue the axial movement after the gripping means (8) for the stub have been engaged and the gasket (9) has been subjected to axial pressure, whereby the end of the rod pushes the non-return valve to an open position, said spring unit (19) being compressed additionally by the continued movement of the piston.

7. Service equipment according to claims 1 - 6, **characterized in that** one or more heating members (16) are mounted in the adapter (1).

## Patentansprüche

1. Wartungsausrüstung zum Warten von Kühlsystemen in Fahrzeugen, umfassend einen Entleerungsmechanismus zum Entleeren eines gegebenenfalls mit Öl versetzten Kühlmittels und/oder einen Einfüllmechanismus zum Einfüllen eines Kühlmittels in einen geschlossenen Kreislauf und mit Mitteln zum Heraussaugen von gegebenenfalls entflammbaren Kühlmitteln, wobei die Mechanismen aus einem Adapter (1) bestehen, der mit Kopplungsmitteln in Form von Greifklauen (8) zum Ergreifen eines Einfüllstutzens (5) versehen ist, wobei die Kopplungsmittel von einem Betätiger (6) aktiviert werden, **dadurch gekennzeichnet, dass** die Kopplungsmittel mit einer Belüftung desjenigen Bereiches (4) innerhalb des Adapters (1), in dem entflammbare Gase auftreten können, versehen ist.

2. Wartungsausrüstung nach Anspruch 1, **dadurch gekennzeichnet, dass** der Einlass der Belüftung zu dem Bereich (4) in dem Adapter (1) über Öffnungen (22) in dem Adaptergehäuse (3) erfolgt und dass ihr Auslass (24) über einen Belüftungskanal erfolgt, der in dessen Zuleitschlauch (2) vorgesehen ist.

3. Wartungsausrüstung nach Ansprüchen 1 und 2, **dadurch gekennzeichnet, dass** die Ausrüstung des Weiteren mit Mitteln zum Drucktesten des Adapters (1) versehen ist, wobei die Mittel einen Drucktest durch Zuleitung von Stickstoff unter Druck zu dem Adapter (1) und einen anschließenden Vakuumtest durch Evakuierung des Adapters (1) umfassen.

4. Wartungsausrüstung nach Anspruch 1, **dadurch gekennzeichnet, dass** die Kopplungsmittel für den Einfüllstutzen angelenkte Greifklauen (8) sind, die mit einer ringförmigen Nut in dem Einfüllstutzen zusammenwirken und die durch axiale Versetzung einer äußeren Hülse (7) mit Eindellungen, die von dem Betätiger (6) verursacht werden, in Eingriff gebracht werden.

5. Wartungsausrüstung nach Ansprüchen 1 und 4, **dadurch gekennzeichnet, dass** Mittel zum Ausüben eines Druckes auf eine Dichtung (9) eine Federeinheit (19) umfassen, die die Dichtung (9) einem axialen Druck aussetzt und deren Feder von dem pneumatischen Betätiger (6) zusammengedrückt wird.

6. Wartungsausrüstung nach Ansprüchen 1, 4, 5, **dadurch gekennzeichnet, dass** derjenige Teil des Betätigers, der ein Rückschlagventil öffnet, eine Stange (10) ist, die sich an der Achse eines Rohres erstreckt, wobei die Stange in fester Verbindung mit einem pneumatischen Kolben ist und dafür ausgelegt ist, die axiale Bewegung fortzusetzen, nachdem die Greifmittel (8) für den Stutzen in Eingriff genommen worden sind und die Dichtung (9) einem axialen Druck ausgesetzt worden ist, wodurch das Ende der Stange das Rückschlagventil in eine offene Position schiebt, wobei die Federeinheit (19) zusätzlich durch die fortgesetzte Bewegung des Kolbens zusammengedrückt wird.

7. Wartungsausrüstung nach Ansprüchen 1 bis 6, **dadurch gekennzeichnet, dass** ein oder mehrere Heizelemente (16) in dem Adapter (1) montiert sind.

## Revendications

1. Equipement d'entretien pour entretenir des systèmes de refroidissement dans des véhicules et comprenant un mécanisme de vidange pour vidanger un fluide de refroidissement, éventuellement mélangé avec de l'huile, et/ou un mécanisme de remplissage pour remplir de fluide de refroidissement un circuit fermé et ayant des moyens pour évacuer par aspiration des fluides de refroidissement éventuellement inflammables, dans lequel les mécanismes sont constitués d'un adaptateur (1), qui est muni de moyens de couplage sous la forme de griffes de préhension (8) pour saisir un embout de remplissage (5), lesdits moyens de couplage étant activés par un actionneur (6), **caractérisé en ce que** lesdits moyens de couplage sont pourvus d'une ventilation de la zone (4) à l'intérieur de l'adaptateur (1) dans laquelle des gaz inflammables peuvent se former.

2. Equipement d'entretien selon la revendication 1, **caractérisé en ce que** l'entrée de la ventilation jusqu'à la zone (4) dans l'adaptateur (1) s'effectue via des ouvertures (22) dans le boîtier d'adaptateur (3), et que sa sortie (24) s'effectue via un canal de ventilation fourni dans son tuyau d'alimentation (2).

3. Equipement d'entretien selon les revendications 1 et 2, **caractérisé en ce que** l'équipement est en outre muni de moyens pour tester l'adaptateur (1) en pression, lesdits moyens comprenant un test de pression par la fourniture d'azote sous pression à l'adaptateur (1), et un test sous vide ultérieur par mise sous vide de l'adaptateur (1).

4. Equipement d'entretien selon la revendication 1, **caractérisé en ce que** les moyens de couplage pour l'embout de remplissage sont des griffes de préhension articulées (8), qui coopèrent avec une gorge annulaire dans l'embout de remplissage, et qui sont amenées en engagement avec des bossages par un déplacement axial d'une douille extérieure (7) provoqué par l'actionneur (6).

5. Equipement d'entretien selon les revendications 1 à 4, **caractérisé en ce que** des moyens pour appliquer une pression au joint (9) comprennent une unité à ressort (19), qui soumet le joint (9) à une pression axiale, et dont le ressort est comprimé par l'actionneur pneumatique (6).

6. Equipement d'entretien selon les revendications 1, 4, 5, **caractérisé en ce que** la partie de l'actionneur qui ouvre un clapet antiretour, est une tige (10) s'étendant sur l'axe du conduittuyau, ladite tige étant en liaison ferme avec le piston pneumatique et étant adaptée pour continuer le mouvement axial après que les moyens de préhension (8) pour l'embout ont été engagés et que le joint (9) a été soumis à une pression axiale, en sorte que l'extrémité de la tige pousse le clapet antiretour jusqu'à une position ouverte, ladite unité à ressort (19) étant de plus comprimée par le mouvement continu du piston.

7. Equipement d'entretien selon les revendications 1 à 6, **caractérisé en ce qu'**un ou plusieurs éléments chauffants (16) sont montés dans l'adaptateur (1).
